# EUROPEAN PATENT APPLICATION

(11) **EP 2 031 890 A1**
(43) Date of publication of application: **04.03.2009**
(21) Application number: 07745409.8
(22) Date of filing: 15.06.2007
(51) Int. Cl.: H04Q 7/36, H04B 7/26

(54) **MOBILE STATION DEVICE, BASE STATION DEVICE, AND DOWNLINK RESOURCE ALLOCATION METHOD**

(30) Priority: 16.06.2006 JP 2006167997
(71) Applicant: NTT DoCoMo, Inc., Chiyoda-ku Tokyo 100-6150 (JP)
(72) Inventor: IWAMURA, Mikio, Tokyo 100-6150 (JP)
(74) Representative: HOFFMANN EITLE
(86) International application number: PCT/JP2007/062155
(87) International publication number: WO 2007/145332

(57) **Abstract**

A disclosed mobile station includes a metric calculation unit configured to calculate a UE-metric of the mobile station; a comparing unit configured to compare the UE-metric with a metric threshold sent from a base station; and a transmitting unit configured to transmit the UE-metric to the base station if the comparison result shows that the UE-metric is equal to or greater than the metric threshold.

## Description

### TECHNICAL FIELD

The present invention generally relates to a mobile station, a base station, and a downlink resource allocation method.

### BACKGROUND ART

In a system like a high speed downlink packet access (HSDPA) system, mobile stations report CQIs at intervals to a base station. A CQI refers to information indicating radio channel quality. For example, each mobile station receives a pilot signal sent from the base station and measures the reception SIR of the pilot signal. In HSDPA, the mobile station quantizes the measured SIR to one of 32 values and sends the quantized value to the base station.

The base station compares CQIs reported by multiple mobile stations and thereby selects one or more of the mobile stations to which downlink data are to be transmitted in the next frame (i.e., performs scheduling). For example, the base station performs scheduling according to a scheduling algorithm such as proportional fairness (see, for example, "Data Throughput of CDMA-HDR: a High Efficiency-High Data Rate Personal Communication Wireless System", A. Jalali, R. Padovani, R. Pankaj, IEEE VTC2000, pp.1854-1858, 2000).

More generally, the mobile station calculates a UE-metric (e.g., a CQI in HSDPA) based on radio channel quality, HARQ status, allocation wait time, throughput, or the like, and sends the calculated metric to the base station.

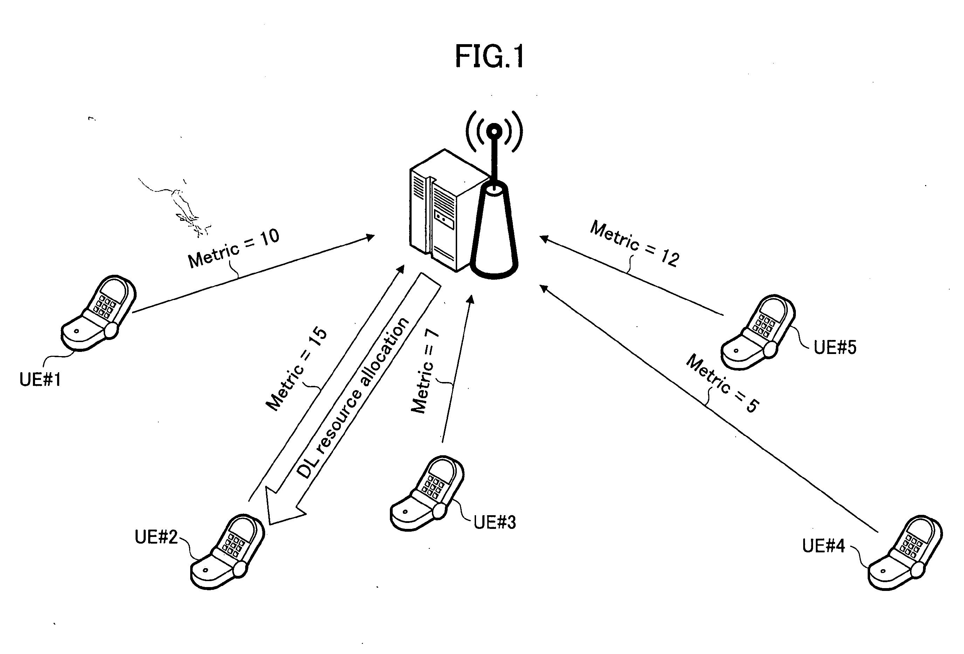

In the example shown in FIG. 1, UE#1 sends a metric of 10, UE#2 sends a metric of 15, UE#3 sends a metric of 7, UE#4 sends a metric of 5, and UE#5 sends a metric of 12 to the base station.

The base station compares the metrics reported by the mobile stations and thereby selects a mobile station to which downlink data are to be transmitted in the next frame. For example, the base station converts the reported metrics into metrics used in proportional fairness and performs scheduling based on the converted metrics. The base station may be configured to also normalize the converted metrics. Also, the base station may be configured to perform scheduling taking into account parameters such as the transmission priority of data, QoS, retransmission waiting status in HARQ, and the amount of buffered downlink data. In FIG. 1, the base station allocates downlink resources to UE#2 reporting the highest metric and transmits data to UE#2.

### DISCLOSURE OF INVENTION

### PROBLEMS TO BE SOLVED BY THE INVENTION

However, the above background art technologies have problems as described below.

In a system like an HSDPA system, because all mobile stations report CQIs at intervals, the CQIs waste uplink resources. More specifically, because the probability that users with low CQIs are selected in the next frame is low, uplink resources used for reporting such low CQIs are likely to be wasted.

Also, for the mobile station, it is a waste of power to report low CQIs when the probability of being allocated downlink resources is low.

One object of the present invention is to solve or reduce one or more of the above problems and to provide a mobile station, a base station, and a downlink resource allocation method that make it possible to reduce the number of metrics to be reported.

### MEANS FOR SOLVING THE PROBLEMS

According to an embodiment of the present invention, a mobile station includes a metric calculation unit configured to calculate a UE-metric of the mobile station; a comparing unit configured to compare the UE-metric with a metric threshold sent from a base station; and a transmitting unit configured to transmit the UE-metric to the base station if the comparison result shows that the UE-metric is equal to or greater than the metric threshold.

This configuration makes it possible to reduce the number of metrics to be sent from mobile stations to a base station.

According to another embodiment of the present invention, a base station includes a scheduler configured to select a mobile station to which downlink data are to be transmitted in the next frame based on metrics reported by mobile stations; a metric threshold calculation unit configured to calculate a metric threshold, which is to be used by the mobile stations to determine whether to report the metrics, based on the metrics reported by the mobile stations and information indicating the mobile station selected by the scheduler; and a broadcasting unit configured to broadcast the metric threshold.

This configuration makes it possible to reduce the number of metrics sent from mobile stations and thereby makes it possible to reduce the number of mobile stations to be handled by a scheduler. This in turn makes it possible to reduce the scheduling workload of a base station.

According to still another embodiment of the present invention, a downlink resource allocation method includes a metric calculation step, performed by mobile stations, of calculating self metrics; a comparison step, performed by the mobile stations, of comparing the metrics with a metric threshold sent from a base station; a transmission step, performed by the mobile stations, of transmitting the metrics to the base station if the comparison result shows that the metrics are equal to or greater than the metric threshold; a scheduling step, performed by the base station, of selecting a mobile station to which downlink data are to be transmitted in the next frame based on the metrics sent from the mobile stations; a metric threshold calculation step, performed by the base station, of calculating the metric threshold, which is to be used by the mobile stations to determine whether to send the metrics, based on the metrics and information indicating the mobile station selected in the scheduling step; and a broadcasting step, performed by the base station, of broadcasting the metric threshold.

This method makes it possible to reduce the number of metrics to be sent from mobile stations. Also, this method makes it possible to reduce the number of mobile stations to be handled by a scheduler and thereby make it possible to reduce the scheduling workload of a base station.

### ADVANTAGEOUS EFFECT OF THE INVENTION

Embodiments of the present invention provide a mobile station, a base station, and a downlink resource allocation method that make it possible to reduce the number of metrics to be reported.

### BRIEF DESCRIPTION OF THE DRAWINGS

FIG. 1 is a drawing illustrating a background-art downlink resource allocation method;
FIG. 2 is a drawing illustrating a downlink resource allocation method according to an embodiment of the present invention;
FIG. 3 is a partial block diagram illustrating a base station according to an embodiment of the present invention;
FIG. 4 is a partial block diagram illustrating a mobile station according to an embodiment of the present invention;
FIG. 5 is a table showing UE-metrics of mobile stations calculated for respective frequency blocks;
FIG. 6 is a table showing exemplary allocation of frequency blocks to mobile stations;
FIG. 7 is a flowchart showing operations of a base station according to an embodiment of the present invention;
FIG. 8 is a flowchart showing operations of a mobile station according to an embodiment of the present invention; and
FIG. 9 is a partial block diagram illustrating a base station according to another embodiment of the present invention.

### EXPLANATION OF REFERENCES

100 Base station
200 Mobile station

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted. Also, values used in the descriptions below are just examples and may vary depending on the case.

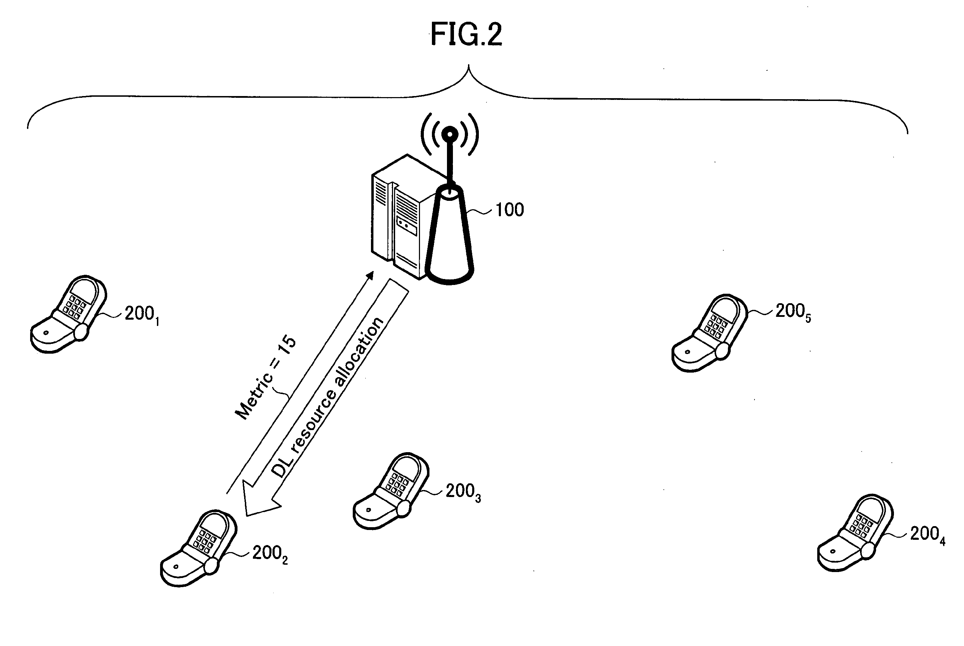

A mobile communication system according to a first embodiment of the present invention is described below with reference to FIG. 2.

A mobile communication system of this embodiment includes a base station 100 and mobile stations 200 (200₁, 200₂, 200₃, 200₄, and 200₅) that can wirelessly communicate with the base station 100.

In the mobile communication system of this embodiment, the base station 100 broadcasts a UE-metric threshold to the mobile stations 200, and the mobile stations 200 report their RPT-metrics to the base station 100 when their UE-metrics are equal to or greater than the UE-metric threshold. The base station 100 performs scheduling for the mobile stations 200 that have reported the RPT-metrics. In this embodiment, a metric refers to an indicator calculated based on at least one of radio channel quality, HARQ status, allocation wait time, and throughput.

In FIG. 2, the base station 100 broadcasts a UE-metric threshold to the mobile stations 200. In this example, it is assumed that the base station 100 broadcasts a UE-metric threshold of 13 to the mobile stations 200. Also, it is assumed that UE-metrics of the mobile stations 200₁, 200₂, 200₃, 200₄, and 200₅ are 10, 15, 7, 5, and 12, respectively.

The mobile stations 200 compare their respective UE-metrics with the UE-metric threshold broadcast by the base station 100. If the UE-metrics are equal to or greater than the UE-metric threshold, the mobile stations 200 generate RPT-metrics based on the UE-metrics and report the generated RPT-metrics to the base station 100. In this example, as shown in FIG. 2, only the mobile station 200₂, whose UE-metric is 15 and greater than the UE-metric threshold, reports an RPT-metric to the base station 100. Accordingly, the base station 100 allocates downlink resources to the mobile station 200₂.

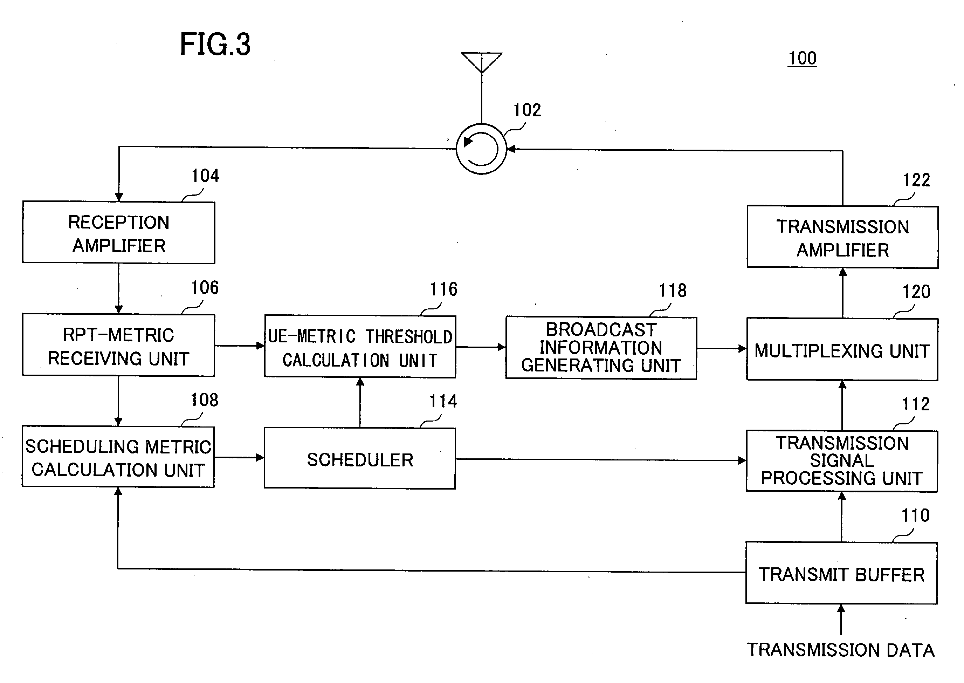

Next, the base station 100 of this embodiment is described with reference to FIG. 3.

The base station 100 includes a transceiver 102 connected to an antenna, a reception amplifier 104, an RPT-metric receiving unit 106, a scheduling metric calculation unit 108, a UE-metric threshold calculation unit 116, a scheduler 114, a broadcast information generating unit 118, a transmit buffer 110 to which transmission data are to be input, a transmission signal processing unit 112, a multiplexing unit 120, and a transmission amplifier 122.

RPT-metrics sent from the mobile stations 200 are received by the RPT-metric receiving unit 106 via the transceiver 102 and the reception amplifier 104 and are then input to the scheduling metric calculation unit 108 and the UE-metric threshold calculation unit 116.

Preferably, reception quality indicators, such as channel quality indicators (CQIs), are used as the RPT-metrics to be sent from the mobile stations 200 to provide the base station 100 with radio channel quality information needed for link adaptation. As described above, each mobile station 200 obtains a CQI by measuring the reception SIR of a pilot signal and quantizing the measured reception SIR to one of 32 values. The base station 100 uses the radio channel quality information also to perform link adaptation for the mobile stations 200.

The scheduling metric calculation unit 108 calculates scheduling metrics used for scheduling based on the RPT-metrics and inputs the scheduling metrics to the scheduler 114. The scheduling metric calculation unit 108 calculates the scheduling metrics according to the scheduling algorithm used by the scheduler 114.

For example, if the scheduler 114 uses a proportional fairness algorithm, the scheduling metric calculation unit 108 calculates proportional fairness metrics; if the scheduler 114 uses an exponential algorithm, the scheduling metric calculation unit 108 calculates exponential metrics; and if the scheduler 114 uses a modified-largest weighted delay first (M-LWDF) algorithm, the scheduling metric calculation unit 108 calculates M-LWDF metrics. The scheduling metric calculation unit 108 may also be configured to calculate scheduling metrics taking into account the amount of buffered data in the transmit buffer 110. In this case, for example, the scheduling metric calculation unit 108 adjusts scheduling metrics based on data buffering time such that resources are allocated preferentially to a user whose data are in the transmit buffer 110 for a long time.

The scheduler 114 performs scheduling based on the scheduling metrics input from the scheduling metric calculation unit 108. In other words, the scheduler 114 selects a mobile station(s) to which downlink data are to be transmitted in the next frame. For example, the scheduler 114 performs scheduling using a scheduling algorithm such as proportional fairness, exponential, or M-LWDF. After scheduling, the scheduler 114 inputs information indicating the mobile station to which downlink data are to be transmitted in the next frame to the UE-metric threshold calculation unit 116 and the transmission signal processing unit 112.

The UE-metric threshold calculation unit 116 calculates a UE-metric threshold based on the RPT-metrics input from the RPT-metric receiving unit 106 and the information indicating the mobile station to which downlink data are to be transmitted in the next frame input from the scheduler 114, and inputs the calculated UE-metric threshold to the broadcast information generating unit 118. For example, the UE-metric threshold calculation unit 116 uses an RPT-metric reported (for the previous frame) by a mobile station selected in the previous frame as a UE-metric threshold. To prevent the UE-metric threshold from increasing, the UE-metric threshold calculation unit 116 is preferably configured to calculate the UE-metric threshold by adjusting the RPT-threshold reported by the mobile station selected in the previous frame. For example, the UE-metric threshold calculation unit 116 may be configured to decrease the UE-metric reported by the mobile station selected in the previous frame by a predetermined value and to use the decreased UE-metric as a UE-metric threshold.

Alternatively, the UE-metric threshold calculation unit 116 may be configured to calculate a mean value of a predetermined number of RPT-metrics of mobile stations selected in latest frames (or a smoothed value obtained by smoothing the predetermined number of RPT-metrics by a low-pass filter) and to use the mean value (or the smoothed value) as a UE-metric threshold. Also, to prevent the UE-metric threshold from increasing, the UE-metric threshold calculation unit 116 may be configured to calculate a mean value of a predetermined number of RPT-metrics of mobile stations selected in latest frames (or a smoothed value obtained by smoothing the predetermined number of RPT-metrics by a low-pass filter) and to obtain a UE-metric threshold by adjusting the mean value (or the smoothed value). For example, the UE-metric threshold calculation unit 116 may be configured to obtain a UE-metric threshold by decreasing the mean value (or the smoothed value) by a predetermined value.

A proportional fairness metric is preferably used as the UE-metric threshold so that the mobile stations 200 can also use proportional fairness metrics.

The broadcast information generating unit 118 generates broadcast information in a predetermined format based on the input UE-metric threshold and inputs the broadcast information to the multiplexing unit 120.

Meanwhile, transmission data are temporarily stored in the transmit buffer 110. Based on information input from the scheduler 114 that indicates a mobile station to which downlink data are to be transmitted in the next frame, the transmission signal processing unit 112 retrieves data for the mobile station from the transmit buffer 110. Then, the transmission signal processing unit 112 inputs the retrieved data to the multiplexing unit 120.

The multiplexing unit 120 multiplexes the broadcast information including the UE-metric threshold and input from the broadcast information generating unit 118 and the data to be transmitted to the mobile station in the next frame, and transmits the multiplexed signal via the transmission amplifier 122.

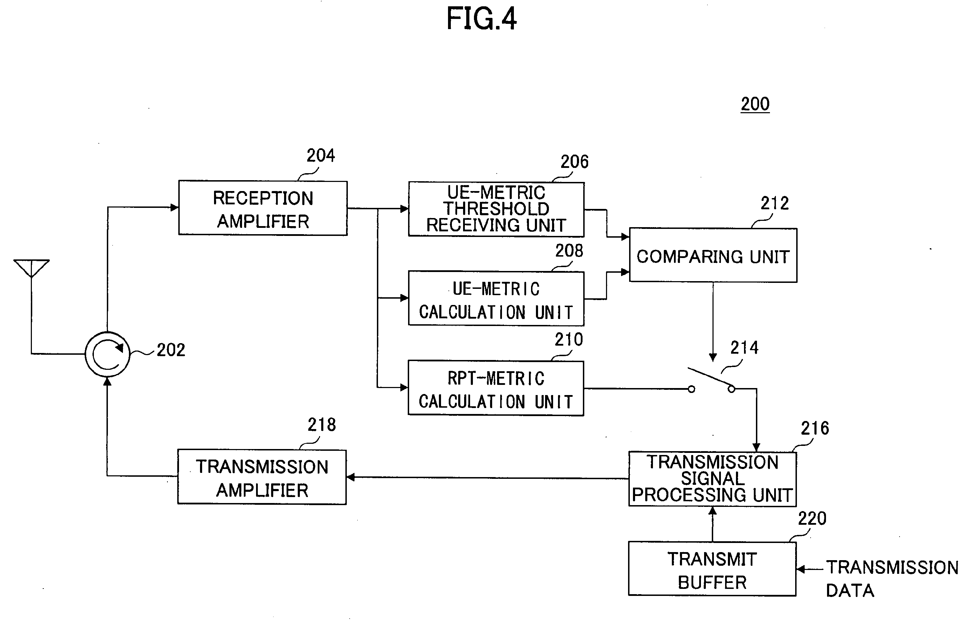

Next, the mobile station 200 of this embodiment is described with reference to FIG. 4.

The mobile station 200 includes a transceiver 202 connected to an antenna, a reception amplifier 204, a UE-metric threshold receiving unit 206, a UE-metric calculation unit 208, an RPT-metric calculation unit 210, a comparing unit 212, a switch 214, a transmission signal processing unit 216, a transmission amplifier 218, and a transmit buffer 220 to which transmission data are to be input.

The UE-metric threshold receiving unit 206 receives the UE-metric threshold sent from the base station 100 via the transceiver 202 and the reception amplifier 204. The UE-metric threshold receiving unit 206 inputs the received UE-metric threshold to the comparing unit 212.

Meanwhile, a pilot channel sent from the base station 100 is input to the UE-metric calculation unit 208 and the RPT-metric calculation unit 210 via the transceiver 202 and the reception amplifier 204.

The UE-metric calculation unit 208 calculates a UE-metric used to determine whether to report an RPT-metric to the base station 100 based on the input pilot channel and inputs the UE-metric to the comparing unit 212. For example, the UE-metric calculation unit 208 measures the reception SIR of the pilot channel and obtains a UE-metric by quantizing the reception SIR to one of 32 values. In other words, the UE-metric calculation unit 208 calculates a CQI.

The RPT-metric calculation unit 210 calculates an RPT-metric to be reported to the base station 100 based on the input pilot channel. The RPT-metric calculation unit 210 is preferably configured to calculate a CQI as the RPT-metric so that the RPT-metric can also be used by the base station 100 as reception quality information to perform link adaptation.

The comparing unit 212 compares the UE-metric threshold input from the UE-metric threshold receiving unit 206 and the UE-metric input from the UE-metric calculation unit 208. If the UE-metric is equal to or greater than the UE-metric threshold, the comparing unit 212 turns on the switch 214. As a result, the RPT-metric is input from the RPT-metric calculation unit 210 to the transmission signal processing unit 216. On the other hand, if the UE-metric is less than the UE-metric threshold, the comparing unit 212 leaves the switch 214 as is (or turns off the switch 214).

The transmission signal processing unit 216 transmits the RPT-metric input from the RPT-metric calculation unit 210 via the transmission amplifier 218.

Meanwhile, transmission data are temporarily stored in the transmit buffer 220. The transmission signal processing unit 216 retrieves data to be sent to another mobile station from the transmit buffer 220 and transmits the data via the transmission amplifier 218.

In LTE, a system frequency band, e.g., 20 MHz, is divided into sub-bands called resource blocks (RBs) each having a bandwidth of, for example, 375 kHz, and the resource blocks are allocated to mobile stations.

In the above embodiment, a process of allocating one resource block to a mobile station is described. When the above embodiment is applied to an LTE system, the UE-metric calculation unit 108 may be configured to calculate UE-metrics for respective frequency blocks (resource blocks). In this case, the mobile station may be configured to use the highest value or a mean value of the UE-metrics calculated for the frequency blocks as a representative value and to perform the above process based on the representative value. For example, the mobile station may be configured to report the representative value or the UE-metrics of the frequency blocks if the representative value is equal to or greater than the UE-metric threshold. Alternatively, the mobile station may be configured to dynamically determine whether to report an RPT-metric for each frequency block. This configuration makes it possible for the mobile station 200 to report only RPT-metrics calculated for frequency blocks whose UE-metrics are equal to or greater than the UE-metric threshold. In other words, this configuration eliminates the need to report RPT-metrics for all frequency blocks and thereby makes it possible to reduce the number of metrics to be reported by the mobile station 200.

Meanwhile, in the above case, the RPT-metric calculation unit 210 also calculates a RPT-metric for each frequency block.

Also, when UE-metrics are calculated for the respective frequency blocks, the comparing unit 212 compares the UE-metric of each frequency block with the UE-metric threshold. If the UE-metric of the frequency block is equal to or greater than the UE-metric threshold, the comparing unit 212 turns on the switch 214. As a result, information regarding frequency blocks whose UE-metrics are equal to or greater than the UE-metric threshold is input from the RPT-metric calculation unit 210 to the transmission signal processing unit 216.

The transmission signal processing unit 216 generates an RPT-metric transmission signal based on the input information regarding the frequency blocks whose UE-metrics are equal to or greater than the UE-metric threshold. Specifically, the transmission signal processing unit 216 generates an RPT-metric transmission signal including the number of reported frequency blocks, IDs of the frequency blocks, and the corresponding RPT-metrics. For example, the RPT-metric transmission signal includes the number of reported frequency blocks, a frequency block ID: 1, the RPT-metric of the frequency block 1, a frequency block ID: 2, the RPT-metric of the frequency block 2, and so on. In the RPT-metric transmission signal, information items may be arranged in descending order of RPT-metrics instead of in ascending order of frequency block IDs.

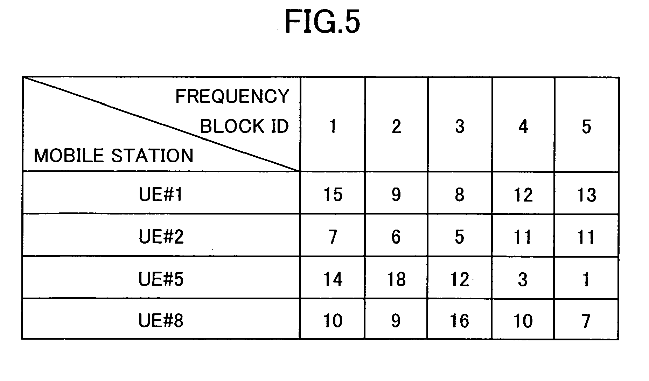

FIG. 5 shows exemplary UE-metrics of mobile stations calculated for respective frequency blocks. Here, it is assumed that the UE-metric threshold is 10. Also, it is assumed that UE-metrics and RPT-metrics are the same. Alternatively, UE-metrics and RPT-metrics may be different.

In this example, a mobile station #1 (UE#1) generates an RPT-metric transmission signal including the number of reported frequency blocks: 3, a frequency block ID: 1, an RPT-metric of the frequency block 1: 15, a frequency block ID: 4, an RPT-metric of the frequency block 4: 12, a frequency block ID: 5, and an RPT-metric of the frequency block 5: 13.

A mobile station #2 (UE#2) generates an RPT-metric transmission signal including the number of reported frequency blocks: 2, a frequency block ID: 4, an RPT-metric of the frequency block 4: 11, a frequency block ID: 5, and an RPT-metric of the frequency block 5: 11.

A mobile station #5 (UE#5) generates an RPT-metric transmission signal including the number of reported frequency blocks: 3, a frequency block ID: 1, an RPT-metric of the frequency block 1: 14, a frequency block ID: 2, an RPT-metric of the frequency block 2: 18, a frequency block ID: 3, and an RPT-metric of the frequency block 3: 12.

A mobile station #8 (UE#8) generates an RPT-metric transmission signal including the number of reported frequency blocks: 3, a frequency block ID: 1, an RPT-metric of the frequency block 1: 10, a frequency block ID: 3, an RPT-metric of the frequency block 3: 16, a frequency block ID: 4, and an RPT-metric of the frequency block 4: 10.

When receiving RPT-metric transmission signals as described above, the scheduling metric calculation unit 108 of the base station 100 converts the RTP-metrics of the respective frequency blocks into scheduling metrics and inputs the scheduling metrics to the scheduler 114.

Based on the scheduling metrics, the scheduler 114 selects, for each frequency block, a mobile station to which downlink data are to be transmitted in the next frame.

An exemplary process of selecting mobile stations is described below. In the exemplary process, it is assumed that scheduling metrics are the same as the RPT-metrics shown in FIG. 5. The process described below may also be applied to a case where scheduling metrics are different from RPT-metrics.

RPT-metrics for the frequency block 1 are sent from the mobile stations UE#1, UE#5, and UE#8, and their scheduling metrics are 15, 14, and 10, respectively. Accordingly, the scheduler 114 allocates the frequency block 1 to the mobile station UE#1.

An RPT-metric for the frequency block 2 is sent from the mobile station UE#5, and its scheduling metric is 18. Accordingly, the scheduler 114 allocates the frequency block 2 to the mobile station UE#5.

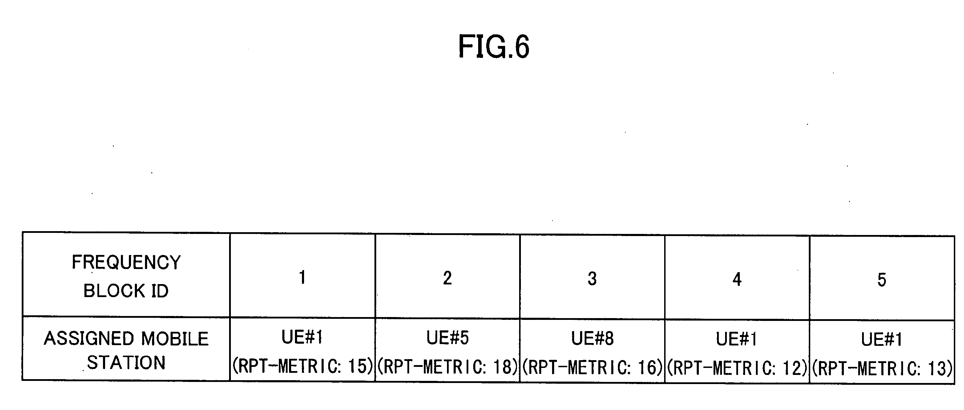

Similarly, as shown in FIG. 6, the scheduler 114 allocates the frequency block 3 to the mobile station UE#8 and allocates the frequency blocks 4 and 5 to the mobile station UE#1.

The UE-metric threshold calculation unit 116 calculates a UE-metric threshold based on the RPT-metrics of the respective frequency blocks input from the RPT-metric receiving unit 106 and information input from the scheduler 114 and indicating mobile stations to which downlink data are to be transmitted by the corresponding frequency blocks in the next frame, and inputs the calculated UE-metric threshold to the broadcast information generating unit 118. For example, the UE-metric threshold calculation unit 116 uses the lowest one of RPT-metrics reported by mobile stations selected in the previous frame as the UE-metric threshold. In other words, the UE-metric threshold calculation unit 116 selects the lowest RPT-metric from RPT-metrics reported for frequency blocks by mobile stations that are allocated the corresponding frequency blocks in the previous frame and uses the lowest RPT-metric as the UE-metric threshold. In the example shown in FIG. 6, the RPT-metric of 12 reported for the frequency block 4 by the mobile station UE#1 to which the frequency block 4 is allocated is used as the UE-metric threshold.

To reduce the variation of the UE-metric threshold, the UE-metric threshold calculation unit 116 is preferably configured to calculate a mean value of a predetermined number of the lowest RPT-metrics in latest frames and to use the mean value as the UE-metric threshold.

Meanwhile, to prevent the UE-metric threshold from increasing, the UE-metric threshold calculation unit 116 is preferably configured to obtain the UE-metric threshold by adjusting the mean value of a predetermined number of the lowest RPT-metrics in latest frames. For example, the UE-metric threshold calculation unit 116 may be configured to obtain the UE-metric threshold by decreasing the mean value by a predetermined value.

Also, multiple methods for calculating the UE-metric threshold may be provided such that an operator can select one of the methods.

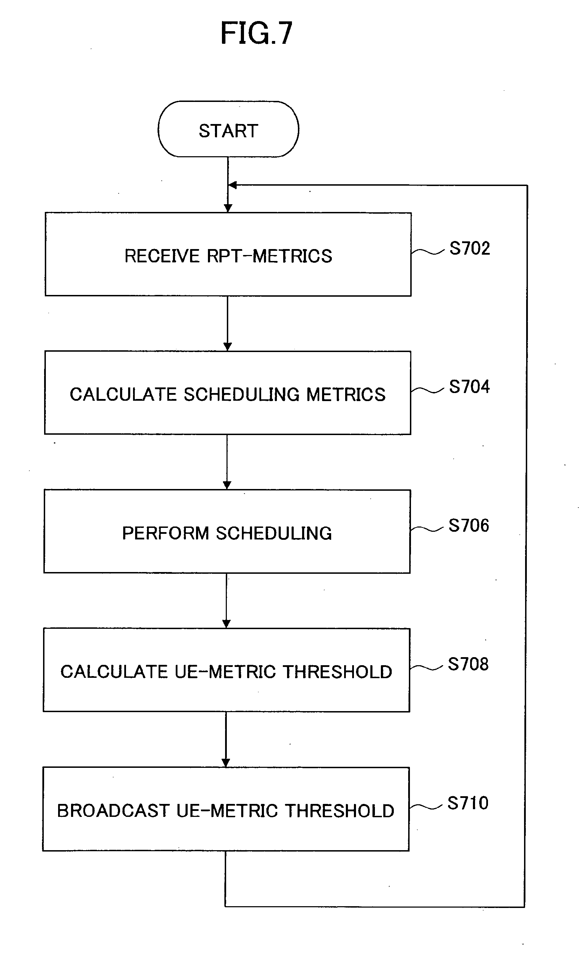

Next, operations of the base station 100 of this embodiment are described with reference to FIG. 7.

In FIG. 7, the RPT-metric receiving unit 106 receives RPT-metrics (step S702).

Next, the scheduling metric calculation unit 108 calculates scheduling metrics based on the RPT-metrics (step S704).

Then, the scheduler 114 performs scheduling based on the scheduling metrics (step S706).

After step S706, the UE-metric threshold calculation unit 116 calculates a UE-metric threshold based on the RPT-metrics and information indicating a mobile station to which downlink data are to be transmitted in the next frame (step S708), and broadcasts the UE-metric threshold (step S710).

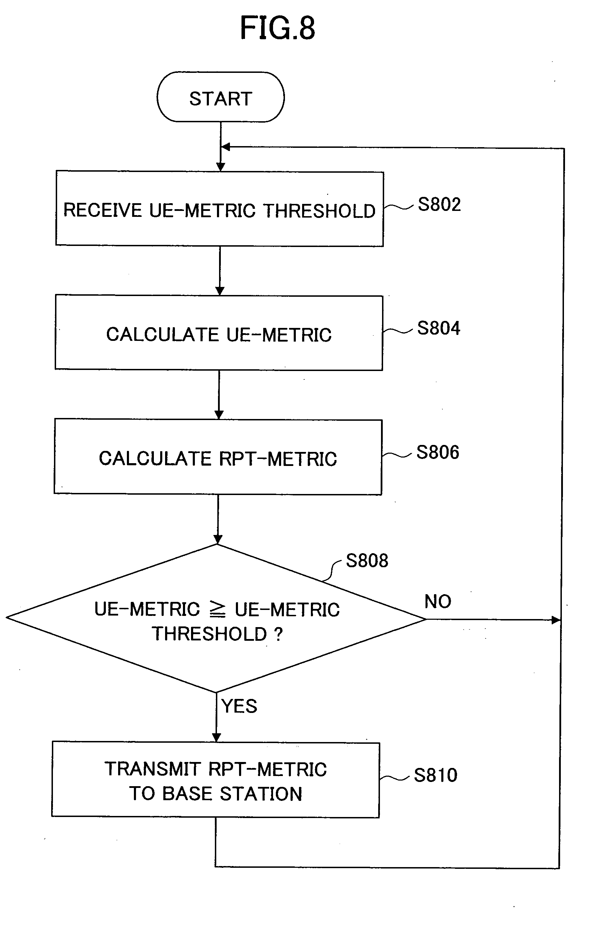

Next, operations of the mobile station 200 of this embodiment are described with reference to FIG. 8.

In FIG. 8, the UE-metric threshold receiving unit 206 receives a UE-metric threshold (step S802).

Next, the UE-metric calculation unit 208 calculates a UE-metric (step S804).

Then, the RPT-metric calculation unit 210 calculates an RPT-metric (step S806).

After step S806, the comparing unit 212 determines whether the UE-metric is equal to or greater than the UE-metric threshold (step S808).

If the UE-metric is equal to or greater than the UE-metric threshold (YES in step S808), the transmission signal processing unit 216 transmits the RPT-metric to the base station 100 (step S810). Then, the process returns to step S802.

On the other hand, if the UE-metric is less than the UE-metric threshold (NO in step S808), the process returns to step S802.

Next, a mobile communication system according to a second embodiment of the present invention is described.

The configuration of the mobile communication system of this embodiment is substantially the same as that of the first embodiment, and therefore its descriptions are omitted here.

The difference between the mobile communication systems of the first and second embodiments is in the configuration of the base station 100.

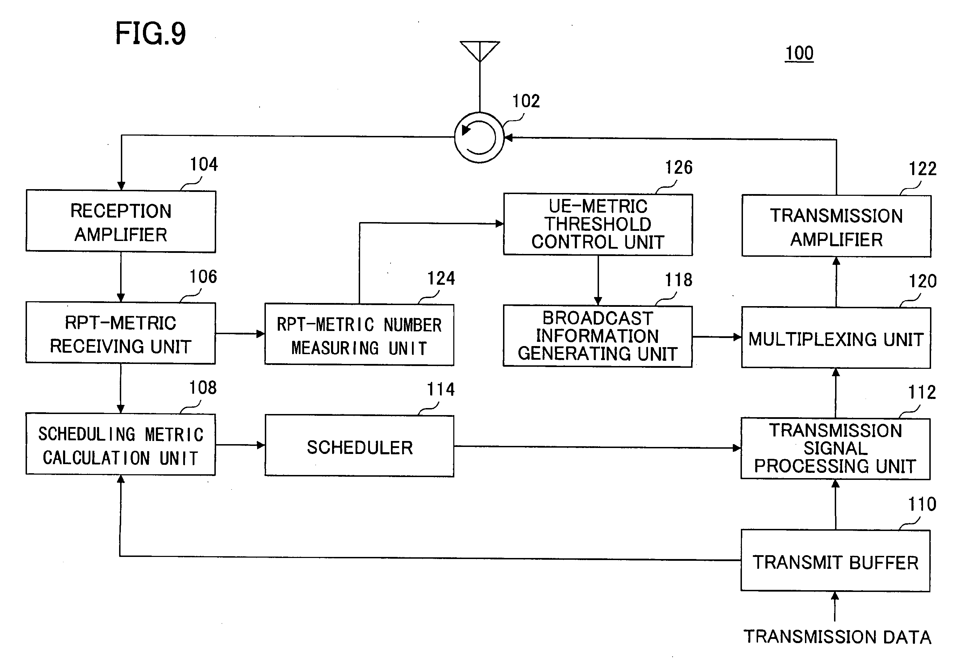

The base station 100 of this embodiment is described below with reference to FIG. 9.

The base station 100 of this embodiment includes a transceiver 102 connected to an antenna, a reception amplifier 104, an RPT-metric receiving unit 106, a scheduling metric calculation unit 108, a scheduler 114, a broadcast information generating unit 118, a transmit buffer 110 to which transmission data are to be input, a transmission signal processing unit 112, a multiplexing unit 120, a transmission amplifier 122, an RPT-metric number measuring unit 124, and a UE-metric threshold control unit 126.

RPT-metrics sent from the mobile stations 200 are received by the RPT-metric receiving unit 106 via the transceiver 102 and the reception amplifier 104 and are then input to the scheduling metric calculation unit 108 and the RPT-metric number measuring unit 124.

The scheduling metric calculation unit 108 calculates scheduling metrics used for scheduling based on the RPT-metrics and inputs the scheduling metrics to the scheduler 114. The scheduling metric calculation unit 108 calculates the scheduling metrics according to the scheduling algorithm used by the scheduler 114. For example, if the scheduler 114 uses a proportional fairness algorithm, the scheduling metric calculation unit 108 calculates proportional fairness metrics; if the scheduler 114 uses an exponential algorithm, the scheduling metric calculation unit 108 calculates exponential metrics; and if the scheduler 114 uses an M-LWDF algorithm, the scheduling metric calculation unit 108 calculates M-LWDF metrics. The scheduling metric calculation unit 108 may also be configured to calculate scheduling metrics taking into account the amount of buffered data in the transmit buffer 110.

The scheduler 114 performs scheduling based on the scheduling metrics input from the scheduling metric calculation unit 108. In other words, the scheduler 114 selects a mobile station to which downlink data are to be transmitted in the next frame. For example, the scheduler 114 performs scheduling using a scheduling algorithm such as proportional fairness, exponential, or M-LWDF.

The RPT-metric number measuring unit 124 measures the total number of reports, such as the number of mobile stations reporting RPT-metrics, based on the RPT-metrics input from the RPT-metric receiving unit 106, and inputs the total number of reports to the UE-metric threshold control unit 126.

The UE-metric threshold control unit 126 determines a UE-metric threshold based on the number of reports input from the RPT-metric number measuring unit 124 such that the number of reports is kept within a predetermined range, and inputs the UE-metric threshold to the broadcast information generating unit 118. For example, the UE-metric threshold control unit 126 increases the UE-metric threshold if the number of reports exceeds an upper threshold and decreases the UE-metric threshold if the number of reports becomes smaller than a lower threshold. This configuration makes it possible to control the number of reports within a predetermined range.

The broadcast information generating unit 118 generates broadcast information in a predetermined format based on the input UE-metric threshold and inputs the broadcast information to the multiplexing unit 120.

Meanwhile, transmission data are temporarily stored in the transmit buffer 110. Based on information input from the scheduler 114 that indicates a mobile station to which downlink data are to be transmitted in the next frame, the transmission signal processing unit 112 retrieves data for the mobile station from the transmit buffer 110. Then, the transmission signal processing unit 112 inputs the retrieved data to the multiplexing unit 120.

The multiplexing unit 120 multiplexes the broadcast information input from the broadcast information generating unit 118 and the data to be transmitted to the mobile station in the next frame, and transmits the multiplexed signal via the transmission amplifier 122.

The configuration of the mobile station of this embodiment is substantially the same as that of the first embodiment, and therefore its descriptions are omitted here.

In the above embodiment, it is assumed that RPT-metrics that are different from UE-metrics are used. Alternatively, UE-metrics may be used as RPT-metrics. In this case, the RPT-metric calculation unit 210 of the mobile station 200 may be omitted.

Embodiments of the present invention make it possible to effectively reduce the number of metrics to be reported from mobile stations and thereby make it possible to save battery energy of the mobile stations.

Also, embodiments of the present invention make it possible to reduce uplink resources used to report metrics by the statistical multiplexing effect.

Further, embodiments of the present invention make it possible to reduce the number of mobile stations to be handled by a scheduler and thereby make it possible to reduce the scheduling workload of a base station.

Although the present invention is described above in different embodiments, the distinctions between the embodiments are not essential for the present invention, and the embodiments may be used individually or in combination. Although specific values are used in the above descriptions to facilitate the understanding of the present invention, the values are just examples and different values may also be used unless otherwise mentioned.

The present invention is not limited to the specifically disclosed embodiments, and variations and modifications may be made without departing from the scope of the present invention. Although functional block diagrams are used to describe devices in the above embodiments, those devices may be implemented by hardware, software, or a combination of them.

The present international application claims priority from Japanese Patent Application No. 2006-167997 filed on June 16, 2006, the entire contents of which are hereby incorporated herein by reference.

### INDUSTRIAL APPLICABILITY

A mobile station, a base station, and a downlink resource allocation method according to embodiments of the present invention may be applied to a wireless communication system.

## Claims

1. A mobile station, comprising:
a metric calculation unit configured to calculate a UE-metric of the mobile station;
a comparing unit configured to compare the UE-metric with a metric threshold sent from a base station; and
a transmitting unit configured to transmit the UE-metric to the base station if the comparison result shows that the UE-metric is equal to or greater than the metric threshold.

2. The mobile station as claimed in claim 1, further comprising:
an RPT-metric calculation unit configured to calculate an RPT-metric to be reported to the base station;
wherein the transmitting unit is configured to transmit the RPT-metric to the base station if the comparison result shows that the UE-metric is equal to or greater than the metric threshold.

3. The mobile station as claimed in claim 2, wherein the comparing unit is configured to convert the metric threshold and the UE-metric into metrics used in a scheduling algorithm of the base station and to compare the converted metrics.

4. The mobile station as claimed in claim 1, wherein
when a system frequency band is divided into sub-bands and the sub-bands are allocated to mobile stations,
the metric calculation unit is configured to calculate UE-metrics of the respective sub-bands;
the comparing unit is configured to compare the UE-metrics of the respective sub-bands with the metric threshold; and
the transmitting unit is configured to transmit the UE-metrics that are equal to or greater than the metric threshold and information indicating the corresponding sub-bands to the base station based on the comparison result.

5. A base station, comprising:
a scheduler configured to select a mobile station to which downlink data are to be transmitted in the next frame based on metrics reported by mobile stations;
a metric threshold calculation unit configured to calculate a metric threshold, which is to be used by the mobile stations to determine whether to report the metrics, based on the metrics reported by the mobile stations and information indicating the mobile station selected by the scheduler; and
a broadcasting unit configured to broadcast the metric threshold.

6. The base station as claimed in claim 5, further comprising:
a scheduling metric calculation unit configured to calculate scheduling metrics used in a scheduling algorithm of the scheduler based on the metrics reported by the mobile stations;
wherein the scheduler is configured to select the mobile station to which the downlink data are to be transmitted in the next frame based on the scheduling metrics.

7. The base station as claimed in claim 5, wherein the metric threshold calculation unit is configured to calculate the metric threshold based on a metric of a mobile station that is selected in the previous frame.

8. The base station as claimed in claim 5, wherein the metric threshold calculation unit is configured to calculate the metric threshold based on a mean value of a predetermined number of metrics reported by the mobile stations that are selected in latest frames or a smoothed value obtained by smoothing the predetermined number of metrics by a low-pass filter.

9. The base station as claimed in claim 5, further comprising:
a metric number measuring unit configured to measure the number of mobile stations reporting the metrics;
wherein the metric threshold calculation unit is configured to calculate the metric threshold such that the number of mobile stations reporting the metrics is kept within a predetermined range.

10. The base station as claimed in claim 5, wherein when a system frequency band is divided into sub-bands and the sub-bands are allocated to the mobile stations, the metric threshold calculation unit is configured to select, in each frame, the lowest metric from metrics reported for the sub-bands by the mobile stations that are allocated the corresponding sub-bands and to use the lowest metric as the metric threshold.

11. The base station as claimed in claim 10, wherein the metric threshold calculation unit is configured to calculate, in each frame, the metric threshold based on a mean value of a predetermined number of the lowest metrics reported for the sub-bands in latest frames by the mobile stations that are allocated the corresponding sub-bands.

12. A downlink resource allocation method, comprising:
a metric calculation step, performed by mobile stations, of calculating self metrics;
a comparison step, performed by the mobile stations, of comparing the metrics with a metric threshold sent from a base station;
a transmission step, performed by the mobile stations, of transmitting the metrics to the base station if the comparison result shows that the metrics are equal to or greater than the metric threshold;
a scheduling step, performed by the base station, of selecting a mobile station to which downlink data are to be transmitted in the next frame based on the metrics sent from the mobile stations;
a metric threshold calculation step, performed by the base station, of calculating the metric threshold, which is to be used by the mobile stations to determine whether to send the metrics, based on the metrics and information indicating the mobile station selected in the scheduling step; and
a broadcasting step, performed by the base station, of broadcasting the metric threshold.
